# EUROPEAN PATENT APPLICATION

(11) **EP 4 250 268 A1**
(43) Date of publication of application: **27.09.2023**
(21) Application number: 20946529.3
(22) Date of filing: 19.11.2020
(51) Int. Cl.: G08G 1/16, B60W 30/16, B60W 60/00

(54) **VEHICLE TRAVEL CONTROL METHOD AND TRAVEL CONTROL DEVICE**

(71) Applicant: Nissan Motor Co., Ltd., Yokohama-shi, Kanagawa 221-0023 (JP)
(72) Inventor: HAYAKAWA, Yasuhisa, Atsugi-shi, Kanagawa 243-0123 (JP)
(74) Representative: Grünecker Patent- und Rechtsanwälte PartG mbB
(86) International application number: PCT/JP2020/043201
(87) International publication number: WO 2022/107277

(57) **Abstract**

Provided is a travel control method including, in an assist level indicating a level of intervention of autonomous travel control in a traveling motion of a vehicle, setting at least a first assist level and a second assist level, which is lower than the first assist level in the level of intervention of the autonomous travel control. In the case where the assist level does not decrease from the first assist level to the second assist level while a subject vehicle (V1) is autonomously following a preceding vehicle (V3) under the autonomous travel control, when the subject vehicle (V1) makes a lane change from a subject vehicle lane (L1) in which the subject vehicle (V1) travels to an adjacent lane (L2) of the subject vehicle lane (L1), the method includes detecting the preceding vehicle (V3) travelling in the adjacent lane (L2), and prohibiting autonomously controlling the lane change of the subject vehicle (V1) when no preceding vehicle travelling in the adjacent lane (L2) is detected.

## Description

### [Technical Field]

The present invention relates to a travel control method and a travel control apparatus for a vehicle.

### [Background Art]

There is a conventionally known technique (Patent Document 1) according to which, in the case of controlling a lane change from a traveling lane to an adjacent lane, when it is determined from map information and a position of a vehicle in the map information that the vehicle is traveling in a lane change prohibition section immediately before a lane changeable section and further when it is determined that there is a following vehicle approaching or coming close to the vehicle, direction indicators on the adjacent lane side are turned on before the vehicle reaches a lane change start position. This can prevent the overtaking of the following vehicle or can suppress cancellation or delay of lane change control by the following vehicle.

### [Prior Art Document]

### [Patent Document]

[Patent Document 1] JP2017-138900A

### [Summary of Invention]

### [Problems to be solved by Invention]

In a travel control method for a vehicle, a plurality of assist levels may be set in a drive assist mode for assisting driver's driving using autonomous travel control including autonomously controlling traveling speed and steering operation. In this case, when the lane change is autonomously executed using the map information and the position of the vehicle in the map information, as in the above prior art, in a situation in which the lane change is possible, conditions of the assist level prior to the lane change may not be satisfied after the lane change. As a result, the assist level will decrease due to the lane change.

A problem to be solved by the present invention is to provide a travel control method and a travel control apparatus that can avoid reduction in the assist level due to an autonomous lane change.

### [Means for solving problems]

In order to solve the above problem, in a drive assist mode for assisting a driving operation of a driver using the autonomous travel control, the present invention sets an assist level indicating a level of intervention of the autonomous travel control in a traveling motion of a subject vehicle. In the case where the assist level does not decrease while the subject vehicle is autonomously following a preceding vehicle under the autonomous travel control, when the subject vehicle makes a lane change from a subject vehicle lane in which the subject vehicle travels to an adjacent lane of the subject vehicle lane, the present invention detects the preceding vehicle travelling in the adjacent lane, and prohibits autonomously controlling the lane change of the subject vehicle when no preceding vehicle travelling in the adjacent lane is detected.

### [Effect of Invention]

According to the present invention, the reduction in the assist level due to the autonomous lane change can be avoided.

### [Brief Description of Drawing]

FIG. 1 is a block diagram illustrating an embodiment of the travel control apparatus for a vehicle according to the present invention.
FIG. 2 is a front view illustrating a part of an input device illustrated in FIG. 1.
FIG. 3 is a plan view illustrating the exemplary lane change control using a lane change assist function of the control apparatus illustrated in FIG. 1.
FIG. 4 is a plan view illustrating one of traveling motions of the subject vehicle controlled by the travel control apparatus illustrated in FIG. 1.
FIG. 5 is a block diagram illustrating a state transition of the travel control apparatus illustrated in FIG. 1.
FIG. 6A is a flowchart illustrating an example of a travel control processing by the travel control apparatus illustrated in FIG. 1 (part 1).
FIG. 6B is a flowchart illustrating an example of a travel control processing by the travel control apparatus illustrated in FIG. 1 (part 2).
FIG. 7 is a flowchart illustrating an example of a subroutine of step S10 in FIG. 6A.

### [Mode(s) for Carrying out the Invention]

Hereinafter, an embodiment of the present invention will be described with reference to attached drawings.

### [Traveling control apparatus]

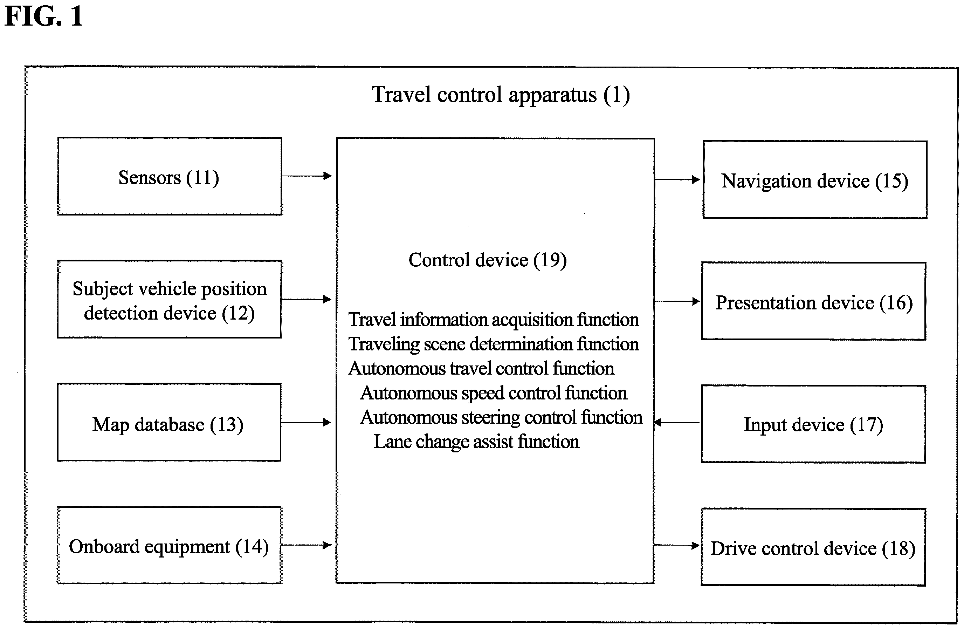

FIG. 1 is a block diagram illustrating the configuration of a travel control apparatus 1 for a vehicle (also referred to as a "subject vehicle", hereinafter) according to the present embodiment. The travel control apparatus 1 also represents an embodiment for carrying out a travel control method for a vehicle according to the present invention. As illustrated in FIG. 1, the travel control apparatus 1 includes sensors 11, a subject vehicle position detection device 12, a map database 13, onboard equipment 14, a navigation device 15, a presentation device 16, an input device 17, a drive control device 18, and a control device 19. These devices are connected to one another, for example, via a controller area network (CAN) or other onboard LAN for mutually exchanging information.

The sensors 11 detect traveling states of the subject vehicle. The sensors 11 include cameras such as a front camera that captures images ahead of the subject vehicle, a rear camera that captures images behind the subject vehicle, and side cameras that capture images on the right and left sides of the subject vehicle. Additionally, or alternatively, the sensors 11 include radars such as a front radar that detects obstacles ahead of the subject vehicle, a rear radar that detects obstacles behind the subject vehicle, and side radars that detect obstacles existing on the right and left sides of the subject vehicle. Additionally, or alternatively, the sensors 11 include a vehicle speed sensor that detects the vehicle speed of the subject vehicle, a touch sensor (capacitance sensor) that detects the holding of steering wheel by a driver, and a driver monitor that captures images of the driver. The sensors 11 may be represented by one of the above-described plurality of sensors or may also be configured as a combination of two or more types of sensors. The control device 19 acquires detection results obtained by the sensors 11 at predetermined time intervals.

The subject vehicle position detection device 12 includes a GPS unit, a gyro sensor, and a vehicle speed sensor. The subject vehicle position detection device 12 detects radio waves transmitted from a plurality of communication satellites using the GPS unit to periodically acquire positional information of an objective vehicle (subject vehicle). In addition, the subject vehicle position detection device 12 detects the current position of the objective vehicle on the basis of the acquired positional information of the objective vehicle, angular variation information acquired from the gyro sensor, and the vehicle speed acquired from the vehicle speed sensor. The control device 19 acquires the positional information of the objective vehicle detected by the subject vehicle position detection device 12 at predetermined time intervals.

The map database 13 is a memory that stores three-dimensional high-precision (or high-definition) map information including positional information of various facilities and specific points and is accessible from the control device 19. The three-dimensional high-precision map information is three-dimensional map information on the basis of the road shape detected when traveling on an actual road using a vehicle for data acquisition. The three-dimensional high-precision map information is map information in which detailed and highly precise positional information items, such as curved roads and the size (e.g., curvature or radius of curvature) of these curves, merging points and branching points of roads, tollgates, and positions where the number of lanes is reduced, are associated with the map information as three-dimensional information.

The onboard equipment 14 includes various modules equipped in the vehicle and operates when manipulated by the driver. Examples of the onboard equipment include a steering wheel, an accelerator pedal, a brake pedal, direction indicators, windshield wipers, lights, a horn, and other specific switches. The onboard equipment 14, when operated by the driver, outputs its operation information to the control device 19.

The navigation device 15 acquires the current positional information of the subject vehicle from the subject vehicle position detection device 12, superimposes the position of the subject vehicle on the map information for navigation to display it on a display or the like. In addition, the navigation device 15 has a navigation function of setting a route to a destination, in response to setting of the destination, and guiding the set route to the driver. The navigation function enables the navigation device 15 to display the route on a map displayed and inform the driver of the route by voice or the like.

The presentation device 16 includes various displays such as the display of the navigation device 15, a display incorporated in a rearview mirror, a display incorporated in a meter unit, and a head-up display projected on a windshield. Additionally, or alternatively, the presentation device 16 includes one or more devices other than the displays, such as speakers of an audio device, seat devices with embedded vibration bodies. The presentation device 16 informs the driver of various presentation information items under the control by the control device 19.

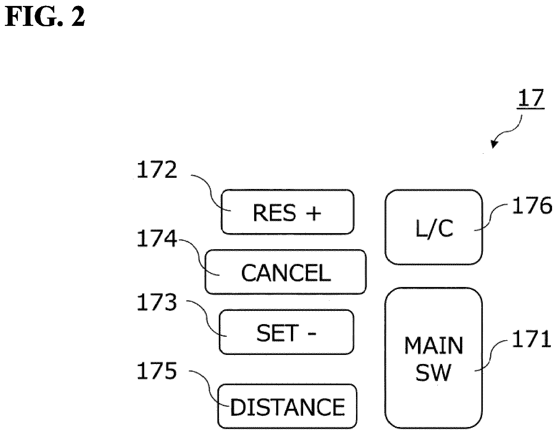

The input device 17 is, for example, a device such as a button switch or a touch panel disposed on a display screen with which the driver can input information by manual operation, or a microphone with which the driver can input information by voice. In the present embodiment, the driver can operate the input device 17 thereby to input setting information in response to the presentation information presented by the presentation device 16. FIG. 2 is a front view illustrating a part of the input device 17 of the present embodiment, as an example including a set of button switches arranged on a spork part of the steering wheel or the like. The input device 17 includes button switches used when setting ON/OFF or the like of an autonomous travel control function (autonomous speed control function and autonomous steering control function) of the control device 19. The input device 17 includes a main switch 171, a resume/acceleration switch 172, a set/coast switch 173, a cancel switch 174, an inter-vehicle distance adjustment switch 175, and a lane change assist switch 176.

The main switch 171 is a switch for turning ON/OFF the power source of a system that achieves the autonomous speed control function and the autonomous steering control function of the control device 19. The resume/acceleration switch 172 is a switch for stopping (turning OFF) the autonomous speed control function and then resuming the autonomous speed control function at the set speed before the OFF state, for increasing the set speed, and/or for following a preceding vehicle to stop and then restarting by the control device 19. The set/coast switch 173 is a switch for starting the autonomous speed control function at the speed when traveling and/or lowering the set speed. The cancel switch 174 is a switch for turning OFF the autonomous speed control function. The inter-vehicle distance adjustment switch 175 is a switch for setting an inter-vehicle distance from a preceding vehicle and is, for example, a switch for selecting one from a plurality of setting stages such as short distance/ medium distance/ long distance. The lane change assist switch 176 is a switch for instructing (accepting) the start of lane change when the control device 19 confirms the lane change start with the driver. By operating the lane change assist switch 176 for a longer time than a predetermined time after accepting the lane change start, the acceptance of the lane change proposed by the control device 19 can be revoked.

Additionally, or alternatively, to the set of button switches illustrated in FIG. 2, a direction indicator lever for the direction indicators or other switches of the onboard equipment 14 can be used as the input device 17. For example, in a case where the control device 19 proposes whether or not to automatically change lanes, when the driver operates the direction indicator lever, the lane change is performed toward the direction in which the direction indicator lever is operated, rather than the proposed lane change. The input device 17 outputs the input setting information to the control device 19.

The drive control device 18 controls the traveling of the subject vehicle. For example, when the subject vehicle travels at a constant set speed using the autonomous speed control function, the drive control device 18 controls the operation of a driving mechanism and the brake operation for achieving the acceleration/deceleration and the traveling speed so that the speed of the subject vehicle becomes the set speed. Additionally, or alternately, when the subject vehicle travels to follow a preceding vehicle using the autonomous speed control function, the drive control device 18 controls the driving mechanism and the brake operation, similarly.

The drive control device 18 executes the steering control of the subject vehicle, by controlling the operation of a steering actuator using the autonomous steering control function, in addition to the above-described control of operations of the driving mechanism and the brake. For example, when executing lane keeping control using the autonomous steering control function, the drive control device 18 detects lane markers of a subject vehicle lane on which the subject vehicle travels and controls the traveling position of the subject vehicle in the road width direction so that the subject vehicle travels at a predetermined position in the subject vehicle lane. Additionally, or alternatively, when executing lane change assist using a lane change assist function described below, the drive control device 18 controls the traveling position of the subject vehicle in the road width direction so that the subject vehicle changes lanes. Additionally, or alternatively, when executing right or left turn assist using the autonomous steering control function, the drive control device 18 performs travel control of turning right or left at an intersection or the like. The drive control device 18 controls the traveling of the subject vehicle in accordance with instructions from the control device 19, which will be described below. Any of other conventionally known methods can also be used as the travel control method executed by the drive control device 18.

The control device 19 includes a read only memory (ROM) that stores programs for controlling the traveling of the subject vehicle, a central processing unit (CPU) that executes the programs stored in the ROM, and a random access memory (RAM) that functions as an accessible storage device. As substitute for or in addition to the CPU (central processing unit), a micro processing unit (MPU), a digital signal processor (DSP), an application specific integrated circuit (ASIC), a field programmable gate array (FPGA), or the like can be used as the operation circuit.

### [Functions of control apparatus]

By causing the CPU to execute the programs stored in the ROM, the control device 19 achieves a travel information acquisition function of acquiring information regarding the traveling state of the subject vehicle, a traveling scene determination function of determining the traveling scene of the subject vehicle, and the autonomous travel control function of autonomously controlling the traveling speed and/or steering of the subject vehicle.

The travel information acquisition function of the control device 19 is a function used to enable the control device 19 to acquire travel information regarding traveling state of the subject vehicle. For example, the control device 19 uses the travel information acquisition function to acquire, as travel information, external image information around the subject vehicle captured by the front camera, the rear camera, and the side cameras of the sensors 11. Additionally, or alternatively, the control device 19 uses the travel information acquisition function to acquire, as travel information, detection results obtained by the front radar, the rear radar, and the side radars. Additionally, or alternatively, the control device 19 uses the travel information acquisition function to acquire, as travel information, vehicle speed information of the subject vehicle detected by the vehicle speed sensor of the sensors 11 and/or image information of a driver's face captured by the onboard camera.

Additionally, or alternatively, the control device 19 uses the travel information acquisition function to acquire, as travel information, current positional information of the subject vehicle from the subject vehicle position detection device 12. Additionally, or alternatively, the control device 19 uses the travel information acquisition function to acquire, as travel information, a set destination and a route to the destination from the navigation device 15. Additionally, or alternatively, the control device 19 uses the travel information acquisition function to acquire, as travel information, positional information such as curved roads and the size (e.g., curvature or radius of curvature) of these curves, merging points, branching points, tollgates, positions where the number of lanes is reduced, from the map database 13. In addition, the control device 19 uses the travel information acquisition function to acquire, as travel information, information on an operation of the onboard equipment 14 by the driver from the onboard equipment 14.

The traveling scene determination function of the control device 19 is a function used to determine a traveling scene in which the subject vehicle is traveling with reference to a table stored in the ROM of the control device 19. The table in the ROM of the control device 19 stores, for example, traveling scenes suitable for the lane change or overtaking and determination conditions thereof for each traveling scene. The control device 19 uses the traveling scene determination function to determine whether or not the traveling scene of the subject vehicle is a traveling scene suitable for the lane change or overtaking, for example, with reference to the table stored in the ROM.

For example, it is assumed that determination conditions set for " a scene of catching up with a preceding vehicle" are the following four conditions: "there is any preceding vehicle ahead"; "vehicle speed of the preceding vehicle < set vehicle speed of the subject vehicle"; "reaching to the preceding vehicle is within a predetermined time", and "the direction of lane change is not a lane change prohibition condition". In this case, the control device 19 uses the traveling scene determination function to determine whether or not the subject vehicle satisfies the above-described conditions on the basis of, for example, detection results obtained by the front camera or the front radar included in the sensors 11, the vehicle speed of the subject vehicle detected by the vehicle speed sensor, and the positional information of the subject vehicle obtained by the subject vehicle position detection device 12. When the above-described conditions are satisfied, the control device 19 determines that the subject vehicle is in the "scene of catching up with the preceding vehicle.

The autonomous travel control function of the control device 19 is a function used to enable the control device 19 to autonomously control the traveling of the subject vehicle without depending on a driver's operation. The autonomous travel control function of the control device 19 includes the autonomous speed control function to be used to autonomously control the traveling speed of the subject vehicle and the autonomous steering control function to be used to autonomously control the steering of the subject vehicle. Hereinafter, the autonomous speed control function and the autonomous steering control function of the present embodiment will be described.

### «Autonomous speed control function»

The autonomous speed control function is a function used to control the traveling motion of the subject vehicle in such a way as to travel to follow a preceding vehicle, when the preceding vehicle is detected, with an upper limit of the vehicle speed that is set by the driver, while performing inter-vehicle distance control in such a way as to maintain the inter-vehicle distance according to the vehicle speed. On the other hand, when no preceding vehicle is detected, the autonomous speed control function is used to control the traveling motion of the subject vehicle in such a way as to perform constant speed travelling at the vehicle speed set by the driver. The former is also referred to as inter-vehicle distance control, and the latter is also referred to constant speed control. The autonomous speed control function may include a function of detecting the speed limit of a road while traveling from a road sign with the sensors 11 or acquiring the speed limit from the map information of the map database 13, to automatically set the speed limit to a set vehicle speed.

To activate the autonomous speed control function, the driver first operates the resume/acceleration switch 172 or the set/coast switch 173 of the input device 17 illustrated in FIG. 2 to input a desired traveling speed. For example, when the set/coast switch 173 is pressed while the subject vehicle is traveling at 70 km/h, the current traveling speed is directly set, but when the speed desired by the driver is 80 km/h, the resume/acceleration switch 172 may be pressed a plurality of times to increase the set speed. On the contrary, when the speed desired by the driver is 60 km/h, the set/coast switch 173 may be pressed a plurality of times to decrease the set speed. The inter-vehicle distance desired by the driver may be selected from a plurality of setting stages such as short distance/ medium distance/ long distance by operating the inter-vehicle distance adjustment switch 175 of the input device 17 illustrated in FIG. 2.

The constant speed control is executed when the front radar or the like of the sensors 11 detects no preceding vehicle ahead of the subject vehicle in the lane thereof. In the constant speed control, the control device 19 causes the drive control device 18 to control operations of the driving mechanism such as the engine and the brake while feeding back vehicle speed data obtained by the vehicle speed sensor so as to maintain the set traveling speed.

The inter-vehicle distance control is executed when the front radar or the like of the sensors 11 detects the presence of any preceding vehicle ahead of the subject vehicle in the lane thereof. In the inter-vehicle distance control, the control device 19 causes the drive control device 18 to control operations of the driving mechanism such as the engine and the brake while feeding back inter-vehicle distance data detected by the front radar so as to maintain the set inter-vehicle distance, with an upper limit of the set traveling speed. During the traveling under the inter-vehicle distance control, when the preceding vehicle stops, the subject vehicle also stops following the preceding vehicle. Additionally, or alternatively, when the preceding vehicle starts travelling within, for example, 30 seconds after the subject vehicle stops, the subject vehicle also starts traveling to follow the preceding vehicle again under the inter-vehicle distance control. When the subject vehicle stops for more than 30 seconds, the subject vehicle does not start in an automated or autonomous manner even when the preceding vehicle starts. The subject vehicle starts traveling to follow the preceding vehicle again under the inter-vehicle distance control in response to pressing on the resume/acceleration switch 172 or stepping on the accelerator pedal after the preceding vehicle starts.

### «Autonomous steering control function»

The autonomous steering control function is a function used to enable the control device 19 to execute steering control of the subject vehicle, by controlling the operation of the steering actuator, when predetermined conditions are satisfied while the above-described the autonomous speed control function is in progress. This autonomous steering control function includes, for example, a lane keeping function and the lane change assist function. The lane keeping function is a function to be used to assist the driver in operating the steering wheel by causing the control device 19 to control the steering actuator so as to travel, for example, near the center of the lane. The lane keeping function is also called a lane width direction maintaining function.

«Lane change assist function»

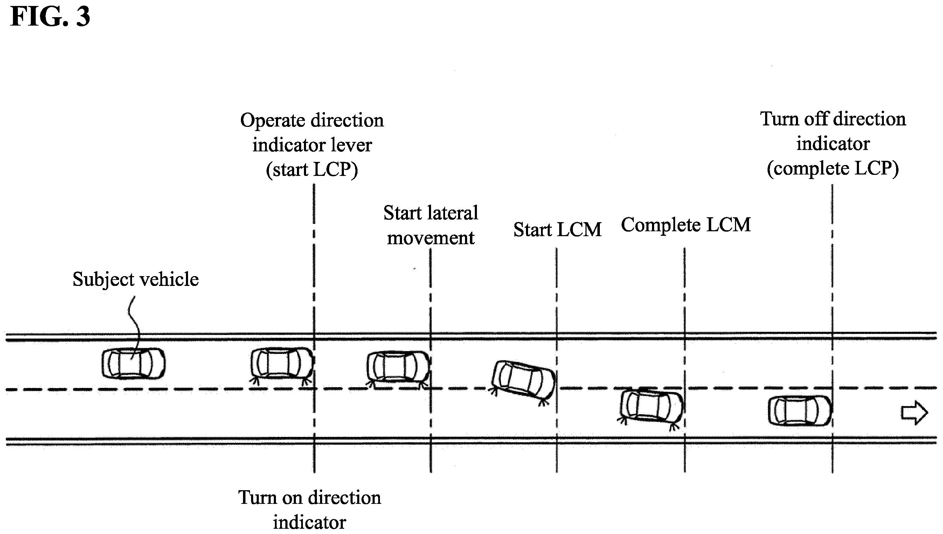

The lane change assist function will be described with reference to FIG. 3. FIG. 3 is a plan view illustrating a traveling scene in which the subject vehicle traveling in the subject vehicle lane on the upper side of the drawing makes a lane change to an adj acent lane on the lower side of the drawing, on a road on which vehicles travel from left to right in the drawing. As illustrated in FIG. 3, the control device 19 turns on the direction indicators in response to an operation of the direction indicator lever by the driver, and when lane change start conditions having been set in advance are satisfied, uses the lane change assist function to start a lane change performance (abbreviated as "LCP", hereinafter) that is a series of processing for automated or autonomous lane change. The control device 19 uses the lane change assist function to determine whether or not the lane change start conditions are satisfied on the basis of various travel information items acquired using the travel information acquisition function. Examples of the lane change start conditions include, but are not limited to, a state where all of the following conditions are satisfied: a lane keeping mode of hands-on mode is being carried out; hands-on determination is in progress; traveling at a speed 60 km/h or more; there is a lane in the lane change direction; the lane as a lane change destination has a space enabling the lane change; the type of lane markers indicates that the lane change is possible, the radius of curvature of the road is 250 m or more; and the elapsed time after the driver operates the direction indicator lever is within one second. When determining that the lane change start conditions are satisfied using the lane change assist function even without any driver's instruction, the control device 19 may propose making a lane change to the driver by causing the presentation device 16 to notify the driver of it.

The lane keeping mode of hands-on mode, which will be described below in detail, refers to a state where executions of the autonomous speed control function and the lane keeping function of the autonomous steering control function are in progress and the holding of the steering wheel by the driver is detected. The hands-on determination being in progress refers to a state where the holding of the steering wheel by the driver continues.

When the lane change start conditions are satisfied, the control device 19 uses the lane change assist function to start the LCP. The LCP includes lateral movement of the subject vehicle to an adjacent lane and lane change maneuver (abbreviated as "LCM", hereinafter) for actual movement to the adjacent lane. The control device 19 uses the lane change assist function to cause the presentation device 16 to present the driver with information indicating that the lane change is being performed in an automated or autonomous manner, while the LCP is in progress, thereby calling attention to the surroundings. When the LCM with the lane change assist function is completed, the control device 19 turns off the direction indicators and starts the execution of the lane keeping function in the adjacent lane.

In the lane change assist function of the present embodiment, there is a plurality of levels of assist set for a drive assist mode that is an assist mode for assisting the driving operation. In the present embodiment, each level of assist is referred to as "assist level". In each assist level, how much the control device 19 intervenes (in other words, how much the driver's manual operation intervenes) in the traveling motion of the subject vehicle is defined. Traveling motions of the present embodiment refer to various traveling motions including the lane change, such as acceleration, deceleration, and turning in right direction or left direction. In the present embodiment, it is assumed that at least a first assist level and a second assist level, which is lower than the first assist level in the level of intervention of the autonomous travel control, are set for the assist level. The control device 19 uses the lane change assist function to combine autonomous control of the traveling speed using the autonomous speed control function and autonomous control of the steering operation using the autonomous steering control function, thereby autonomously controlling the traveling of the subject vehicle and achieving the assist of the driving operation determined by each assist level. That is, the control device 19 intervenes in the traveling motion of the vehicle within the range determined by each assist level, and autonomously controls the traveling motion. A manual operation by the driver is performed in the case where the control device 19 does not intervene in the traveling motion.

The assist levels can be set, for example, on the basis of the levels of driving automation defined in SAE J3016: SEP2016, Taxonomy and Definitions for Terms Related to Driving Automation Systems for On-Road Motor Vehicles, disclosed by the Society of Automotive Engineers of USA (SAE). For example, an assist level 0 is the standard in which the driver performs all the driving tasks necessary for the traveling motions. An assist level 1 is the standard in which the control device 19 continuously executes either the autonomous speed control or the autonomous steering control (not both at the same time) in a specific limited area, and the driver performs operations for either the traveling speed of the subject vehicle or the steering of the subject vehicle by the steering (not both at the same time). An assist level 2 is the standard in which the control device 19 continuously executes both the autonomous speed control and the autonomous steering control in a specific limited area, and the driver performs operations for either the traveling speed of the subject vehicle or the steering of the subject vehicle by the steering (not both at the same time). An assist level 3 is the standard in which the control device 19 continuously executes all the driving tasks in a limited area. An assist level 4 is the standard in which the control device 19 executes all the driving tasks, and continuously executes the response to each case where continuing the control is difficult in a limited area. An assist level 5 is the standard in which the control device 19 continuously and unlimitedly executes all the driving tasks and the response to each case where continuing the control is difficult.

The assist level 1 corresponds to, for example, controlling the traveling speed of the subject vehicle under the autonomous speed control by the control device 19. The assist level 2 corresponds to, for example, executing a lane keeping mode of hands-off mode under the autonomous steering control by the control device 19. Accordingly, the situation in which the assist level of the drive assist mode decreases is, for example, a situation in which the traveling environment of the subject vehicle changes because of the lane change from the subject vehicle lane to the adjacent lane made by the subject vehicle, the conditions for continuing the control in the hands-off mode are no longer satisfied, the lane keeping mode of hands-off mode cannot be maintained, and the transition to traveling speed control under the autonomous speed control occurs.

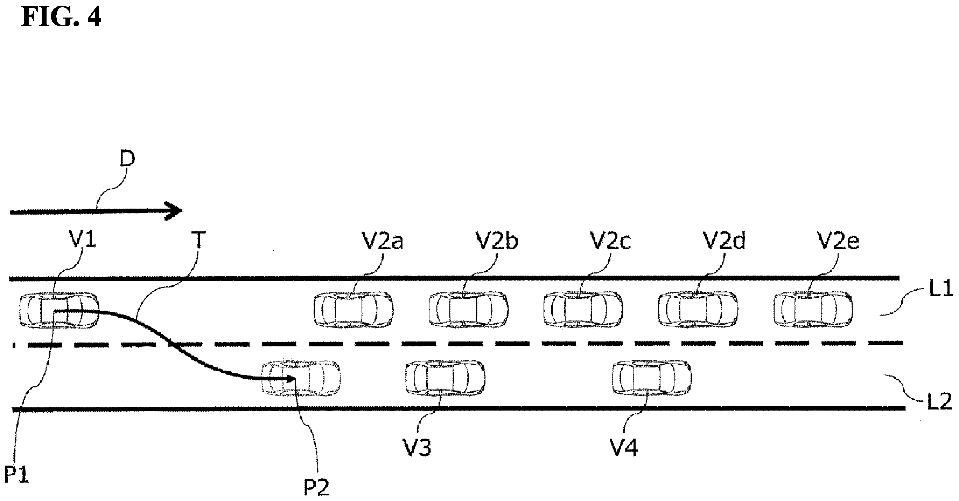

A concrete situation in which the assist level of the drive assist mode decreases will be described below with reference to FIG. 4. In the present embodiment, it is assumed that the assist level of the drive assist mode does not decrease while the subject vehicle is autonomously following the preceding vehicle and is maintained at least while following at the traveling speed equal to or less than a first traveling speed. The first traveling speed is a traveling speed at which the driver is required to monitor the autonomous traveling motion when the subject vehicle is autonomously following the preceding vehicle, for example, by autonomously controlling the traveling speed and the steering operation. The first traveling speed can be set to a value within an appropriate range according to the traveling environment of the subject vehicle such as road shape and surrounding obstacles.

FIG. 4 is a plan view illustrating a situation in which a subject vehicle V1 travels on a road illustrated in FIG. 4, in which the traveling direction of the road is the direction indicated by an arrow D of FIG. 4. The road includes a subject vehicle lane L1 in which the subject vehicle V1 is traveling and an adjacent lane L2 that is a lane adjacent to the subject vehicle lane L1. Preceding vehicles V2a to V2e are traveling in the subject vehicle lane L1, while preceding vehicles V3 and V4 are traveling in the adjacent lane L2. In the scene illustrated in FIG. 4, the adjacent lane L2 is a lane in which only a specific vehicle can travel, such as a carpool lane or a taxi lane. While the subject vehicle lane L1 is congested, the adjacent lane L2 is empty. Further, it is assumed that the subject vehicle V1 is currently executing a lane keeping mode of autonomous steering control/hands-off mode, by following the preceding vehicle V2a.

In this scene, when the subject vehicle V1 is a specific vehicle that can travel in the adjacent lane L2, the control device 19 uses the lane change assist function to start the LCP from the subject vehicle lane L1 to the adjacent lane L2 in order to maintain the set traveling speed while avoiding the congestion of the subject vehicle lane L1. For example, the subject vehicle V1 travels along a trajectory T from a traveling position P1 to a traveling position P2 under the autonomous control by the control device 19. At this time, when there is no preceding vehicle traveling in the adjacent lane L2, the subject vehicle V1 cannot follow the preceding vehicle by making the lane change to the adjacent lane L2. The assist level of the drive assist mode cannot be maintained and will decrease. As a result, the autonomous lane change will increase driver's manual operations, and a sense of incongruity will be imparted on the driver.

Therefore, in the lane change assist function of the present embodiment, when the subject vehicle V1 makes a lane change from the subject vehicle lane L1 to the adjacent lane L2, the travel information acquisition function is used to detect the preceding vehicle V3 traveling in the adjacent lane L2, with the sensors 11 such as the front camera and the front radar. When the preceding vehicle V3 traveling in the adjacent lane L2 is not detected, autonomously controlling the lane change of the subject vehicle V1 is prohibited, in principle. On the other hand, when the preceding vehicle V3 traveling in the adjacent lane L2 is detected, it is determined whether or not the subject vehicle V1 can follow the preceding vehicle V3 on the basis of the traveling speed of the preceding vehicle V3 detected by the front radar and the traveling speed of the subject vehicle V1 detected by the vehicle speed sensor. For example, it is determined whether or not the subject vehicle V1 can follow the preceding vehicle V3 at a traveling speed equal to or less than the first traveling speed. Then, when it is determined that the subject vehicle V1 cannot follow the preceding vehicle V3, autonomously controlling the lane change of the subject vehicle V1 is prohibited.

When determining whether or not the subject vehicle V1 can follow the detected preceding vehicle V3, the control device 19 calculates, for example, a difference between the traveling speed of the subject vehicle V1 detected by the vehicle speed sensor and the traveling speed of the preceding vehicle detected by the front radar. When this difference is equal to or less than a predetermined value, the control device 19 determines that the subject vehicle V1 can follow the preceding vehicle V3. An appropriate value (e.g., 0 to 10 km/h) at which the subject vehicle V1 can avoid any collision with the preceding vehicle V3 can be set as the predetermined value. Alternatively, in addition to this, when the situation in which the above difference is equal to or less than the predetermined value is maintained for a predetermined time or more, the control device 19 may determine that the subject vehicle V1 can follow the preceding vehicle V3. The predetermined time may be set to an appropriate time (e.g., 5 to 10 seconds) during which the traveling state of the preceding vehicle V3 can be confirmed.

Further, in the case of detecting the plurality of the preceding vehicles V3 and V4 traveling in the adjacent lane L2, the control device 19 may detect the traveling speeds of the respective preceding vehicles V3 and V4 and calculate an average traveling speed of the plurality of the preceding vehicles V3 and V4 from the traveling speeds of respective preceding vehicles V3 and V4 to set the average traveling speed as the traveling speed of the preceding vehicle. This makes it possible to appropriately determine whether or not the subject vehicle V1 can follow the preceding vehicles V3 and V4, even in the case where the plurality of the preceding vehicles V3 and V4 are traveling in the adjacent lane L2. The number of the preceding vehicles is not limited to two and may be three or more.

In the lane change assist function of the present embodiment, when no preceding vehicle traveling in the adjacent lane L2 is detected, and when it is determined that the subject vehicle V1 cannot follow the preceding vehicle V3, for example, because the traveling speed exceeds the first traveling speed, the autonomously controlling the lane change of the subject vehicle V1 is prohibited, in principle. However, when no preceding vehicle traveling in the adjacent lane L2 is detected, or when it is determined that the subject vehicle V1 cannot follow the preceding vehicle V3, in the case of setting a second traveling speed that is the traveling speed at which the assist level of the subject vehicle V1 does not decrease before and after the lane change, even in a situation not following any preceding vehicle, the control device 19 further determines whether or not the traveling speed of the subject vehicle V1 is equal to or less than the second traveling speed. Then, when the traveling speed of the subject vehicle V1 is equal to or less than the second traveling speed, the autonomously controlling the lane change of the subject vehicle V1 may be exceptionally permitted. The second traveling speed can be set to a suitable traveling speed (e.g., 60 km/h) at which the subject vehicle V1 can avoid an obstacle ahead after detecting the obstacle with the sensors 11 such as the front camera and the front radar. This can avoid a situation in which the sense of incongruity is imparted on the driver by continuously traveling a congested lane.

### [State transition of travel control apparatus]

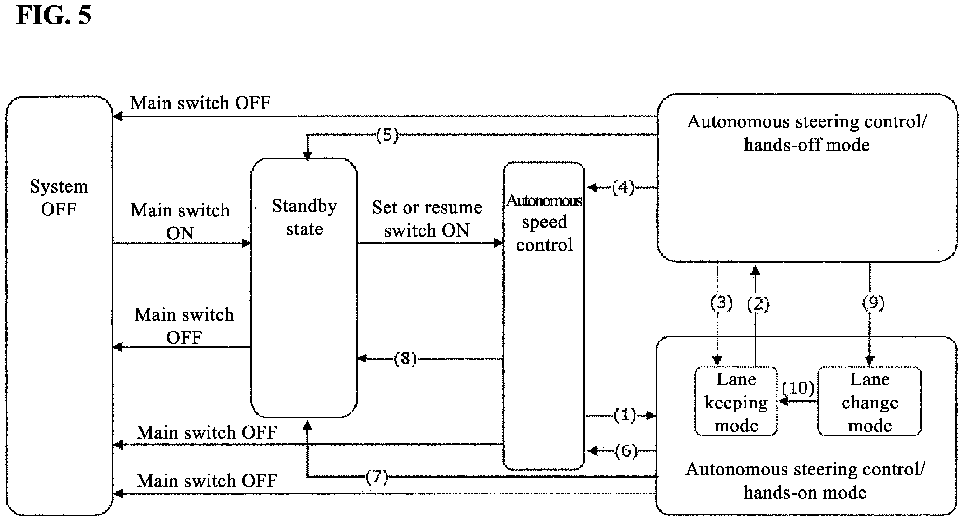

FIG. 5 is a block diagram illustrating a state transition of each function established in the control device 19. The system illustrated in the drawing is an autonomous travel control system achieved by the control device 19. When the main switch 171 of FIG. 2 is turned on from the system OFF state illustrated in the drawing, this system is put into a standby state. Upon turning on the set/coast switch 173 or the resume/acceleration switch 172 of FIG. 2 in this standby state, the autonomous speed control is launched. This starts the constant speed control or the inter-vehicle distance control described above. The driver is only required to operate the steering wheel to cause the subject vehicle to travel, without stepping on the accelerator or the brake.

While the autonomous speed control is in progress, when a condition (1) of FIG. 5 is satisfied, the transition to a lane keeping mode of autonomous steering control/hands-on mode occurs. Examples of this condition (1) include, but are not limited to, satisfaction of all the following conditions: lane markers on both sides of the subject vehicle are detected; the driver is holding the steering wheel; the vehicle is traveling near the center of the lane; the direction indicators are not operating: the windshield wipers are not operating at high speed (HI); and when a high-precision map is provided, there is not a tollgate, an exit, a merging point, an intersection, or a point at which the number of lanes decreases, within about 200 m ahead. The hands-on mode refers to a mode in which the autonomous steering control is not activated unless the driver holds the steering wheel. The hands-off mode refers to a mode in which the autonomous steering control is activated even when the driver releases his/her hands from the steering wheel.

While the lane keeping mode of autonomous steering control/hands-on mode is in progress, when a condition (2) of FIG. 5 is satisfied, the transition to the lane keeping mode of autonomous steering control/hands-off mode occurs. Examples of this condition (2) include, but are not limited to, satisfaction of all the following conditions: the subject vehicle is traveling on an automobile road; the vehicle is traveling on a road that is structurally separated from the oncoming lane; the vehicle is traveling on a road for which a high-precision map is prepared; the vehicle is traveling at a speed equal to or less than the speed limit; GPS signals are effective; the driver is holding the steering wheel; the driver is facing forward; there is not a tollgate, an exit, a merging point, an intersection, or a point at which the number of lanes decreases, within about 800 m ahead; there is not a sharp curve of 100R or less within about 500 m ahead; the vehicle is not traveling in a tunnel that exceeds 500 m from the tunnel entrance; and the accelerator pedal is not depressed.

On the contrary, when a condition (3) of FIG. 5 is satisfied while the lane keeping mode of autonomous steering control/hands-off mode is in progress, the transition to the lane keeping mode of autonomous steering control/hands-on mode occurs. Examples of this condition (3) include, but are not limited to, satisfaction of any one of the following conditions: the subject vehicle is traveling on a road other than an automobile road; the vehicle is traveling in a two-way traffic section; the vehicle is traveling on a road for which no high-precision map is prepared; the vehicle is traveling at a speed higher than the speed limit; GPS signals can no longer be received; the driver does not face forward within 5 seconds after a forward gaze alarm is activated; the driver monitor camera can no longer detect the driver; there is any of a tollgate, an exit, a merging point, and a point at which the number of lanes decreases, within about 800 m ahead; when traveling at a vehicle speed of less than about 40 km/h, there is a sharp curve of 100R or less within about 200 m ahead; when traveling at a vehicle speed of about 40 km/h or more, there is a sharp curve of 170R or less within about 200 m ahead; the vehicle is traveling in a tunnel that exceeds 500 m from the tunnel entrance; the driver is stepping on the accelerator pedal while holding the steering wheel; and an approaching alarm is operating.

While the lane keeping mode of autonomous steering control/hands-off mode is in progress, when a condition (4) of FIG. 5 is satisfied, the autonomous steering control is stopped and the transition to the autonomous speed control occurs. Examples of this condition (4) include, but are not limited to, satisfaction of any one of the following conditions: lane markers on both sides of the subject vehicle are no longer detected for a certain period of time; the driver has operated the steering wheel; and the windshield wipers have operated at high speed (HI). Further, when a condition (5) of FIG. 5 is satisfied while the lane keeping mode of autonomous steering control/hands-off mode is in progress, the autonomous steering control and the autonomous speed control are stopped and the transition to the standby state occurs. Examples of this condition (5) include, but are not limited to, satisfaction of any one of the following conditions: the driver has operated the brake; the driver has operated the cancel switch 174 of FIG. 2; one or more doors of the subject vehicle have opened; the driver's seat belt has been released; the seating sensor has detected that the driver is no longer on the driver's seat; the select lever is shifted to other than "D" or "M"; the parking brake has been operated; the antiskid brake system of the subject vehicle has been turned off; the antiskid brake system has operated; the snow mode has been turned on; the emergency brake has operated; the stop state continues for about 3 minutes after the subject vehicle has stopped due to the vehicle speed control; the front camera has detected poor visibility such as being unable to correctly recognize an object due to dirt, backlight, rain/fog, or the like; the front radar has detected shielding or radio disturbance; the front radar has detected an axis deviation; the side radar has detected shielding or radio disturbance; and the side radar has detected an axis deviation.

While the autonomous steering control/hands-on mode is in progress, when a condition (6) of FIG. 5 is satisfied, the autonomous steering control is stopped and the transition to the autonomous speed control occurs. Examples of this condition (6) include, but are not limited to, satisfaction of any one of the following conditions: lane markers on both sides of the subject vehicle are no longer detected; the driver has operated the steering wheel; the driver has operated the direction indicators; the windshield wipers have operated at high speed (HI); the vehicle has come to a tollgate section when a high-precision map is prepared; and the front camera has detected poor visibility such as being unable of correctly recognize an object due to dirt, backlight, rain/fog, or the like. Further, when a condition (7) of FIG. 5 is satisfied while the autonomous steering control/hands-on mode is in progress, the autonomous steering control and the autonomous speed control are stopped and the transition to the standby state occurs. Examples of this condition (7) include, but are not limited to, satisfaction of any one of the following conditions: the driver has operated the brake; the driver has operated the cancel switch 174 of FIG. 2; one or more doors of the subject vehicle have opened; the driver's seat belt has been released; the seating sensor has detected that the driver is no longer on the driver's seat; the select lever is shifted to other than "D" or "M"; the parking brake has been operated; the antiskid brake system of the subject vehicle has been turned off; the antiskid brake system has operated; the snow mode has been turned on; the emergency brake has operated; the stop state continues for about 3 minutes after the subject vehicle has stopped due to the vehicle speed control; the front radar has detected shielding or radio disturbance; and the front radar has detected an axis deviation.

While the autonomous speed control is in progress, when a condition (8) of FIG. 5 is satisfied, the transition to the standby state occurs. Examples of this condition (8) include, but are not limited to, satisfaction of any one of the following conditions: the driver has operated the brake; the driver has operated the cancel switch 174 of FIG. 2; one or more doors of the subject vehicle have opened; the driver's seat belt has been released; the seating sensor has detected that the driver is no longer on the driver's seat; the select lever is shifted to other than "D" or "M"; the parking brake has been operated; the antiskid brake system of the subject vehicle has been turned off; the antiskid brake system has operated; the snow mode has been turned on; the emergency brake has operated; the stop state continues for about 3 minutes after the subject vehicle has stopped due to the vehicle speed control; the front radar has detected shielding or radio disturbance; and the front radar has detected an axis deviation.

While the lane keeping mode of autonomous steering control/hands-off mode is in progress, when a condition (9) of FIG. 5 is satisfied, the transition to a lane change mode of autonomous steering control/hands-on mode occurs. Examples of this condition (9) include, but are not limited to, satisfaction of any one of the following conditions: the driver has pressed the lane change assist switch 176 of FIG. 2 in response to a proposal of a lane change by the system; and the driver has operated the direction indicators.

While the lane change mode of autonomous steering control/hands-on mode is in progress, when a condition (10) of FIG. 5 is satisfied, the transition to the lane keeping mode of autonomous steering control/hands-on mode occurs. Examples of this condition (10) include, but are not limited to, satisfaction of any one of the following conditions: the speed limit has been exceeded before the start of the LCP; the driver has stepped on the accelerator pedal while holding the steering wheel before the start of the LCP; the LCP can no longer be started within 10 seconds after pressing the lane change assist switch 176 during the proposal of a lane change when there is a slow vehicle ahead; the LCP can no longer be started and the vehicle has come too close to the branching point after pressing the lane change assist switch 176 during the proposal of a lane change to travel along the route; the LCM can no longer be started within 5 seconds after the LCP has operated; the vehicle speed has fallen below about 50 km/h after starting the LCP and before starting the LCM; there is no longer a space in the adjacent lane required to change lanes after operating the LCP and before starting the LCM; the driver has performed a cancel operation before starting the LCM; lane markers can no longer be detected before starting the LCM; a determination has been made before starting the LCM that the adjacent lane L2 is not present in the direction of changing lanes or the adjacent lane L2 will disappear within a certain distance ahead; a determination has been made before starting the LCM that there is a curve with a radius of curvature of 250 m or less within a certain distance ahead; a determination has been made before starting the LCM that there is a section within a certain distance ahead in which the type of lane marking prohibits a lane change to the adjacent lane L2; the side radar has detected shielding or radio disturbance before starting the LCM; the side radar has detected an axis deviation before starting the LCM; the hands-on alarm has operated (which is established under any of the following conditions: the steering wheel has not been held by the driver within about 2 seconds after activation of the LCP; the steering wheel has not been held by the driver within about 2 seconds after pressing of the lane change assist switch 176 during the proposal of a lane change in a situation in which there is a slow vehicle ahead; the steering wheel has not been held by the driver within about 2 seconds after pressing of the lane change assist switch 176 during the proposal of a lane change in order to travel along the route); the driver has stopped the direction indicators; and the LCP has been completed.

When the main switch 171 is turned off in any one of the autonomous steering control/hands-off mode, the autonomous steering control/hands-on mode, the autonomous speed control, and the standby state, the system is turned off.

### [Travel control processing by travel control apparatus]

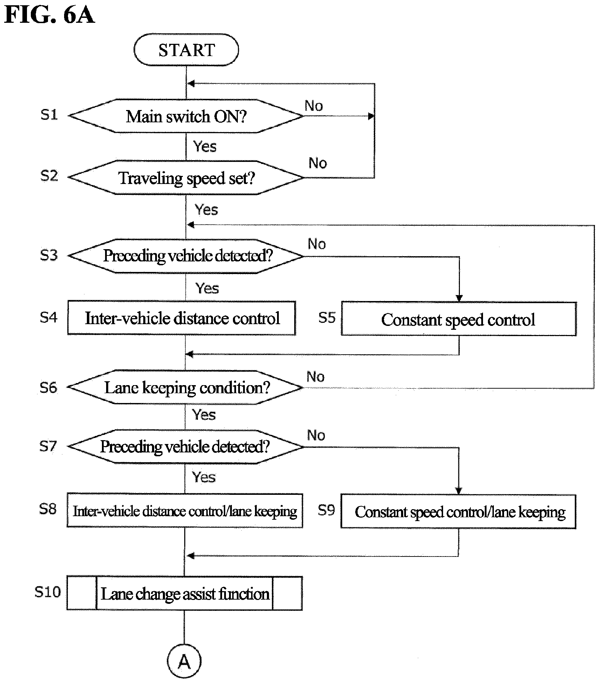

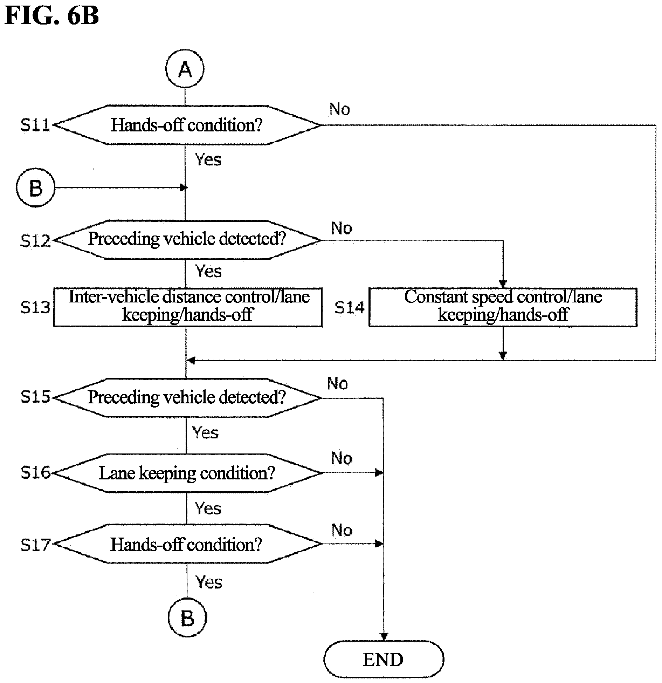

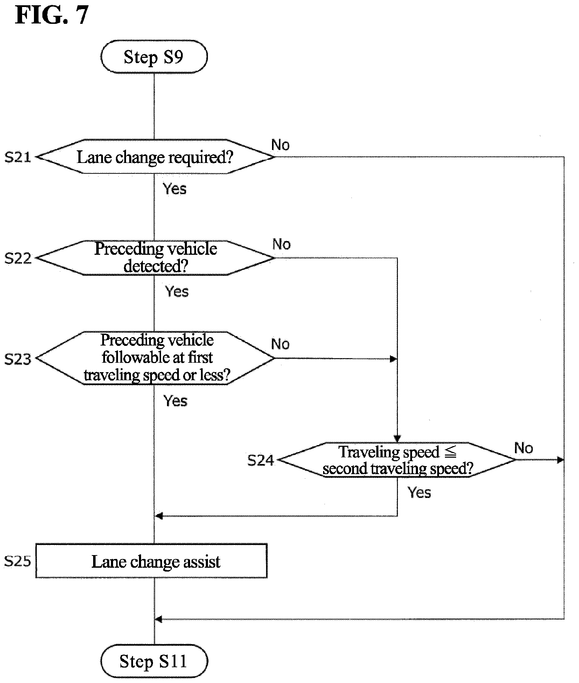

Next, travel control processing according to the present embodiment will be described with reference to FIGS. 6A and 6B and FIG. 7. FIGS. 6A and 6B and FIG. 7 are flowcharts illustrating the travel control processing according to the present embodiment. FIGS. 6A and 6B illustrate basic travel control processing. FIG. 7 illustrates the subroutine of step S10 in FIG. 6A.

The travel control processing described below is executed by the control device 19 at predetermined time intervals. Further, in the following description, it is assumed that the control device 19 uses the autonomous travel control function to execute the autonomous speed control and the autonomous steering control, and the lane keeping control for controlling the traveling position of the subject vehicle in the road width direction is being performed so that the subject vehicle travels in the lane at the speed set by the driver.

In step S1 of Fig. 6A, the control device 19 determines whether or not the main switch 171 is ON. When the main switch 171 is OFF (No in step S1), then the control device 19 repeats the processing of step S1 until the main switch 171 is turned ON. To the contrary, when the main switch 171 is ON (Yes in step S1), the processing proceeds to step S2.

In step S2, the control device 19 determines whether or not the driver has set the traveling speed. When the traveling speed is not set (No in step S2), the processing returns to step S1, and the control device 19 repeats the processing of steps S1 and S2 until the traveling speed is set. To the contrary, when the traveling speed is already set (Yes in step S2), the processing proceeds to step S3. Regarding the setting of the traveling speed by the driver, the driver can manipulate the resume/acceleration switch 172 or the set/coast switch 173 of the input device 17 illustrated in FIG. 2 to input a desired traveling speed.

When the driver completes the setting of the traveling speed, the control device 19 starts the autonomous speed control. In step S3, the control device 19 detects whether or not there is any preceding vehicle ahead of the subject vehicle in the traveling lane thereof, with the front radar (the sensors 11) that detects an obstacle ahead of the subject vehicle. When a preceding vehicle is detected (Yes in step S3), then the processing proceeds to step S4, in which the control device 19 executes the inter-vehicle distance control. To the contrary, when no preceding vehicle is detected (No in step S3), the processing proceeds to step S5, in which the control device 19 executes the constant speed control. This only requires the driver to operate the steering wheel and can cause the subject vehicle to travel at the desired speed, without stepping on the accelerator or the brake.

While the inter-vehicle distance control of step S4 or the constant speed control of step S5 is being executed, in step S6, the control device 19 determines whether or not the above-described condition (1) is satisfied for the transition into the lane keeping mode of autonomous steering control/hands-on mode. When the condition (1) is not satisfied (No in step S6), then the processing returns to step S3 and the inter-vehicle distance control or the constant speed control is continued. To the contrary, when the condition (1) is satisfied (Yes in step S6), the processing proceeds to step S7.

In step S7, the control device 19 detects whether or not there is any preceding vehicle ahead of the subject vehicle in the traveling lane thereof, with the front radar (the sensors 11) that detects an obstacle ahead of the subject vehicle. When a preceding vehicle is detected (Yes in step S7), then the processing proceeds to step S8, in which the control device 19 executes inter-vehicle distance control/lane keeping mode. To the contrary, when no preceding vehicle is detected (No in step S7), the processing proceeds to step S9, in which the control device 19 executes constant speed control/lane keeping mode. In this state, lane change assist function execution processing of step S10 is performed. Details of step S10 will be described below.

While the inter-vehicle distance control/lane keeping mode in step S8 or the constant speed control/lane keeping mode in step S9 is being executed, in the following step S11 of FIG. 6B, the control device 19 determines whether or not the above-described condition (2) is satisfied for the transition into the autonomous steering control/hands-off mode. When the condition (2) is satisfied (Yes in step S11), then the processing proceeds to step S12. To the contrary, when the condition (2) is not satisfied (No in step S11), the processing proceeds to step S15 described below.

In step S12 in which the condition (2) for the transition to the autonomous steering control/hands-off mode is satisfied, the control device 19 detects whether or not there is any preceding vehicle ahead of the subject vehicle in the traveling lane thereof, with the front radar (the sensors 11) that detects an obstacle ahead of the subject vehicle. When a preceding vehicle is detected (Yes in step S12), the processing proceeds to step S13, in which the control device 19 executes inter-vehicle distance control/lane keeping mode/hands-off. To the contrary, when no preceding vehicle is detected (No in step S12), the processing proceeds to step S14, in which the control device 19 executes constant speed control/lane keeping mode/hands-off.

In step S15, the control device 19 detects whether or not there is any preceding vehicle ahead of the subject vehicle in the traveling lane thereof, with the front radar (the sensors 11) that detects an obstacle ahead of the subject vehicle. When no preceding vehicle is detected (No in step S15), the processing returns to step S1, in which the control device 19 continues the subsequent processing. To the contrary, when a preceding vehicle is detected (Yes in step S 15), the processing of the control device 19 proceeds to step S16.

In step S16, similar to step S6, the control device 19 determines whether or not the condition (1) is satisfied for the transition into the lane keeping mode of autonomous steering control/ hands-on mode. When the condition (1) is not satisfied (No in step S16), then the processing returns to step S1, in which the control device 19 continues the subsequent processing. To the contrary, when the condition (1) is satisfied (Yes in step S16), the processing proceeds to step S17.

In step S17, the control device 19 determines whether or not the condition (2) is satisfied for the transition to the autonomous steering control/hands-off mode, similar to step S11. When the condition (2) is satisfied (Yes in step S17), the processing returns to step S12 to continue the subsequent processing. To the contrary, when the condition (2) is not satisfied (No in step S17), the processing returns to step S1, in which the control device 19 continues the subsequent processing.

In step S10 of FIG. 6A, processing illustrated in FIG. 7 is executed as the lane change assist function execution processing. First, in step S21 of FIG. 7, the control device 19 determines whether or not the subject vehicle V1 requires a lane change. For this determination, a route to the destination set by the navigation device 15 is used. When it is determined that the lane change is unnecessary (No in step S21), then the processing proceeds to step S11 without executing the lane change assist, and the travel control processing is continued. To the contrary, when it is determined that the lane change is necessary (Yes in step S21), the processing proceeds to step S22.

In step S22, the control device 19 detects whether or not there is the preceding vehicle V3 traveling ahead of the subject vehicle V1 in the adjacent lane L2, with the front radar and the front camera (the sensors 11) that detect the obstacle ahead of the subject vehicle V1. When the preceding vehicle V3 traveling in the adjacent lane L2 is detected (Yes in step S22), the processing proceeds to step S23. To the contrary, when the preceding vehicle V3 traveling in the adjacent lane L2 is not detected (No in step S22), the processing proceeds to step S24.

In step S23, the control device 19 determines whether or not the subject vehicle V1 can follow the preceding vehicle V3 detected in step S22 at the traveling speed equal to or less than the first traveling speed. For this determination, for example, the traveling speed of the subject vehicle V1 detected by the vehicle speed sensor and the traveling speed of the preceding vehicle detected by the front radar can be used. For example, it is determined whether or not the difference in traveling speed between the subject vehicle V1 and the preceding vehicle V3 is equal to or less than a set predetermined value. When it is determined that the subject vehicle V1 can follow the preceding vehicle V3 at the traveling speed equal to or less than the first traveling speed (Yes in step S23), then the processing proceeds to step S25, in which the control device 19 uses the lane change assist function to autonomously control the lane change of the subject vehicle V1. To the contrary, when it is determined that the subject vehicle V1 cannot follow the preceding vehicle V3 at the traveling speed equal to or less than the first traveling speed (No in step S23), the processing proceeds to step S24.

In step S24, the control device 19 determines whether or not the traveling speed of the subject vehicle V1 is equal to or less than the second traveling speed, which is the traveling speed at which the assist level of the subject vehicle V1 does not decrease before and after the lane change from the subject vehicle lane L1 to the adjacent lane L2, even in the situation not following the preceding vehicle V3. The vehicle speed sensor (the sensors 11) is used to detect the traveling speed of the subject vehicle V1. When it is determined that the traveling speed of the subject vehicle V1 is equal to or less than the second traveling speed (Yes in step S24), the processing proceeds to step S25, in which the control device 19 uses the lane change assist function to autonomously control the lane change of the subject vehicle V1. To the contrary, when it is determined that the traveling speed of the subject vehicle V1 exceeds the second traveling speed (No in step S24), the processing proceeds to step S11 without executing the lane change assist, and the travel control processing is continued.

### [Embodiment of the present invention]

As described above, according to the travel control method and the travel control apparatus 1 for a vehicle of the present embodiment, in the drive assist mode for assisting the driving operation of the driver using the autonomous travel control including autonomously controlling the traveling speed and the steering operation, the assist level indicating the level of intervention of the autonomous travel control in the traveling motion of the vehicle is set. At least the first assist level and the second assist level, which is lower than the first assist level in the level of intervention of the autonomous travel control, are set for the assist level. In the case where the assist level does not decrease from the first assist level to the second assist level while the subject vehicle V1 is following the preceding vehicle V3 under the autonomous travel control, when the subject vehicle V1 makes the lane change from the subject vehicle lane L1 in which the subject vehicle V1 travels to the adjacent lane L2 of the subject vehicle lane V1, the preceding vehicle V3 traveling in the adjacent lane L2 is detected, and when no preceding vehicle traveling in the adjacent lane L2 is detected, autonomously controlling the lane change of the subject vehicle V1 is prohibited. This can avoid the situation in which the subject vehicle V1 cannot follow the preceding vehicle when making the lane change to the adjacent lane L2 and the assist level of the drive assist mode cannot be maintained and decreases. As a result, the situation in which the driver's burden in operations increases because of the autonomous lane change can be avoided. In addition, the situation in which the sense of incongruity is imparted on the driver because of the increase of manual operations for the lane change assist can be avoided.

Further, according to the travel control method and the travel control apparatus 1 for a vehicle of the present embodiment, the preceding vehicle V3 traveling in the adjacent lane L2 is detected. In the case of detecting the preceding vehicle V3 traveling in the adjacent lane L2, whether or not the subject vehicle V1 can autonomously follow the detected preceding vehicle V3 is determined, and autonomously controlling the lane change of the subject vehicle V1 is prohibited when it is determined that the subject vehicle V1 cannot autonomously follow the detected preceding vehicle V3. This can determine whether or not to prohibit autonomously controlling the lane change of the subject vehicle V1 according to the traveling state of the preceding vehicle V3.

Further, according to the travel control method and the travel control apparatus 1 for a vehicle of the present embodiment, in the case of determining whether or not the subject vehicle V1 can autonomously follow the detected preceding vehicle V3, the traveling speed of the subject vehicle V1 and the traveling speed of the preceding vehicle V3 are detected, and the difference between the traveling speed of the subject vehicle V1 and the traveling speed of the preceding vehicle V3 is calculated, and then it is determined that the subject vehicle V1 can follow the preceding vehicle V3 when the difference is equal to or less than the predetermined value. This can further avoid the collision between the subject vehicle V1 and the preceding vehicle V3.

Further, according to the travel control method and the travel control apparatus 1 for a vehicle of the present embodiment, it is determined that the subject vehicle V1 can autonomously follow the preceding vehicle V3 when the situation in which the difference between the traveling speed of the subject vehicle V1 and the traveling speed of the preceding vehicle V3 is equal to or less than the predetermined value is maintained for the predetermined time or more. This can determine whether or not the subject vehicle V1 can follow the preceding vehicle V3 after confirming the traveling state of the preceding vehicle V3. As a result, the collision between the subject vehicle V1 and the preceding vehicle V3 can be further avoided.

Further, according to the travel control method and the travel control apparatus 1 for a vehicle of the present embodiment, in the case of detecting the plurality of the preceding vehicles V3 and V4, the traveling speed of each of the preceding vehicles V3 and V4 is detected, the average traveling speed of the plurality of the preceding vehicles V3 and V4 is calculated from the traveling speeds of respective preceding vehicles V3 and V4, and the average traveling speed is set as the traveling speed of the preceding vehicle. This can appropriately determine whether or not the subject vehicle V1 can follow the plurality of the preceding vehicles V3 and V4 even in the case where the plurality of the preceding vehicles V3 and V4 are traveling in the adjacent lane L2.

Further, according to the travel control method and the travel control apparatus 1 for a vehicle of the present embodiment, in the case of setting the first traveling speed at which the driver is required to monitor the autonomous traveling motion when the subject vehicle V1 is autonomously following the preceding vehicle under the autonomous travel control, in response to the detection of the preceding vehicle V3 travelling in the adjacent lane L2, it is determined whether or not the subject vehicle V1 can autonomously follow the detected preceding vehicle V3 at the traveling speed equal to or less than the first traveling speed. When it is determined that the subject vehicle V1 can autonomously follow the detected preceding vehicle V3 at the traveling speed equal to or less than the first traveling speed, autonomously controlling the lane change of the subject vehicle V1 is permitted. When it is determined that the subject vehicle V1 cannot autonomously follow the detected preceding vehicle V3 at the traveling speed equal to or less than the first traveling speed, autonomously controlling the lane change of the subject vehicle V1 is prohibited. This can avoid the situation in which the driver's monitoring is required for the autonomous lane change. As a result, the situation in which the sense of incongruity is imparted on the driver because of the monitoring required for the lane change assist can be avoided.

Further, according to the travel control method and the travel control apparatus 1 for a vehicle of the present embodiment, in the case of setting the second traveling speed being the traveling speed at which the assist level of the subject vehicle V1 does not decrease from the first assist level to the second assist level before and after the lane change, even in the situation not following any preceding vehicle, it is further determined whether or not the traveling speed of the subject vehicle V1 is equal to or less than the second traveling speed when the preceding vehicle V3 traveling in the adjacent lane L2 is not detected, or when it is determined that the subject vehicle V1 cannot autonomously follow the preceding vehicle V3 traveling in the adjacent lane L2. When it is determined that the traveling speed of the subject vehicle V1 is equal to or less than the second traveling speed, autonomously controlling the lane change of the subject vehicle V1 is permitted. This can avoid the situation in which the sense of incongruity is imparted on the driver because of the continuously traveling in the congested lane.

Further, according to the travel control method and the travel control apparatus 1 for a vehicle of the present embodiment, the adjacent lane L2 is the lane in which only a specific vehicle can travel. This can determine whether or not to prohibit the autonomously control of the lane change according to the traveling environment of the road.

### [Description of Reference Numerals]

- 1: Travel control apparatus
- 11: Sensors
- 12: Subject vehicle position detection device
- 13: Map database
- 14: Onboard equipment
- 15: Navigation device
- 16: Presentation device
- 17: Input device
- 171: Main switch
- 172: Resume/acceleration switch
- 173: Set/coast switch
- 174: Cancel switch
- 175: Inter-vehicle distance adjustment switch
- 176: Lane change assist switch
- 18: Drive control device
- 19: Control device
- V1: Subject vehicle
- V2, V2a, V2b, V2c, V2d, V2e: Preceding vehicle (subject vehicle lane)
- V3, V4: Preceding vehicle (adjacent lane)
- L1: Subject vehicle lane
- L2: Adjacent lane
- D: Traveling direction
- P1, P2: Traveling position
- T: Trajectory

## Claims

1. A travel control method for a vehicle, comprising:
in a drive assist mode for assisting a driving operation of a driver using autonomous travel control including autonomously controlling traveling speed and a steering operation, setting an assist level indicating a level of intervention of the autonomous travel control in a traveling motion of the vehicle; and
executing the autonomous travel control for the traveling motion on a basis of the set assist level,
the travel control method further comprising:
setting at least a first assist level and a second assist level for the assist level, the second assist level being lower than the first assist level in the level of intervention of the autonomous travel control; and
in a case where the assist level does not decrease from the first assist level to the second assist level while a subject vehicle is autonomously following a preceding vehicle under the autonomous travel control,
when the subject vehicle makes a lane change from a subject vehicle lane in which the subject vehicle travels to an adjacent lane of the subject vehicle lane, detecting the preceding vehicle traveling in the adjacent lane; and
prohibiting the autonomously controlling the lane change of the subject vehicle when no preceding vehicle traveling in the adjacent lane is detected.

2. The method according to claim 1, comprising:
detecting the preceding vehicle traveling in the adjacent lane;
determining whether or not the subject vehicle can autonomously follow the detected preceding vehicle when the preceding vehicle traveling in the adjacent lane is detected; and
prohibiting autonomously controlling the lane change of the subject vehicle when it is determined that the subject vehicle cannot autonomously follow the detected preceding vehicle.

3. The method according to claim 2, comprising:
in the case of determining whether or not the subject vehicle can autonomously follow the detected preceding vehicle,
detecting the traveling speed of the subject vehicle and the traveling speed of the preceding vehicle;
calculating a difference between the traveling speed of the subject vehicle and the traveling speed of the preceding vehicle; and
determining that the subject vehicle can follow the preceding vehicle when the difference is equal to or lower than a predetermined value.

4. The method according to claim 3, comprising:
determining that the subject vehicle can autonomously follow the preceding vehicle when the situation in which the difference is equal to or lower than the predetermined value is maintained for a predetermined time or more.

5. The method according to claim 3 or 4, comprising:
detecting the traveling speed of each preceding vehicle when a plurality of preceding vehicles is detected;
calculating an average traveling speed of the plurality of preceding vehicles, from the traveling speed of each preceding vehicle; and
setting the average traveling speed as the traveling speed of the preceding vehicle.

6. The method according to any one of claims 2 to 5, comprising:
in the case of setting a first traveling speed at which the driver is required to monitor an autonomous traveling motion when the subject vehicle is autonomously following the preceding vehicle under the autonomous travel control,
when the preceding vehicle traveling in the adjacent lane is detected, determining whether or not the subject vehicle can autonomously follow the detected preceding vehicle at a traveling speed equal to or less than the first traveling speed;
permitting autonomously controlling the lane change of the subject vehicle, when it is determined that the subject vehicle can autonomously follow the detected preceding vehicle at the traveling speed equal to or less than the first traveling speed; and
prohibiting autonomously controlling the lane change of the subject vehicle, when it is determined that the subject vehicle cannot autonomously follow the detected preceding vehicle at the traveling speed equal to or less than the first traveling speed.

7. The method according to any one of claims 1 to 6, comprising:
in the case of setting a second traveling speed that is a traveling speed at which the assist level of the subject vehicle does not decrease from the first assist level to the second assist level before and after the lane change, even in a situation not following any preceding vehicle,
further determining whether or not the traveling speed of the subject vehicle is equal to or less than the second traveling speed, when no preceding vehicle traveling in the adjacent lane is detected, or when it is determined that the subject vehicle cannot autonomously follow the preceding vehicle traveling in the adjacent lane; and
permitting autonomously controlling the lane change of the subject vehicle, when it is determined that the traveling speed of the subject vehicle is equal to or less than the second traveling speed.

8. The method according to any one of claims 1 to 7, wherein
the adjacent lane is a lane in which only a specific vehicle can travel.

9. A travel control apparatus for a vehicle, the vehicle comprising a processor for executing autonomous travel control including autonomously controlling traveling speed and steering operation, wherein
an assist level indicating a level of intervention of the autonomous travel control in a traveling motion of the vehicle is set in a drive assist mode for assisting a driving operation of a driver using the autonomous travel control,
at least a first assist level and a second assist level are set for the assist level, the second assist level being lower than the first assist level in the level of intervention of the autonomous travel control, and
in a case where the assist level does not decrease from the first assist level to the second assist level while a subject vehicle is autonomously following a preceding vehicle under the autonomous travel control, the processor is configured to:
detect the preceding vehicle traveling in the adjacent lane when the subject vehicle makes a lane change from a subject vehicle lane in which the subject vehicle travels to an adjacent lane of the subject vehicle lane; and
prohibit autonomously controlling the lane change of the subject vehicle when no preceding vehicle traveling in the adjacent lane is detected.
